# FASCICULE DE BREVET EUROPEEN

(11) **EP 2 041 493 B1**
(45) Date de publication et mention de la délivrance du brevet: **31.08.2016**
(21) Numéro de dépôt: 07823553.8
(22) Date de dépôt: 05.07.2007
(51) Int. Cl.: F23D 14/84

(54) **PROCÉDÉ DE CHAUFFAGE D'UNE CHARGE**
VERFAHREN ZUR ERHITZUNG EINER LADUNG
METHOD FOR HEATING A CHARGE

(30) Priorité: 06.07.2006 FR 0652846
(43) Date de publication de la demande: 01.04.2009
(73) Titulaire: L'AIR LIQUIDE, Société Anonyme pour l'Etude et l'Exploitation des Procédés Georges Claude, 75007 Paris (FR)
(72) Inventeur: DOCQUIER, Nicolas, Philadelphia, PA 19103 (US); LABEGORRE, Bernard, 75015 Paris (FR); ZAMUNER, Bernard, 92380 Garches (FR)
(74) Mandataire: De Vleeschauwer, Natalie Y.L.D.
(86) Numéro de dépôt international: PCT/FR2007/051599
(87) Numéro de publication internationale: WO 2008/003909

(56) Documents cités:
- WO-A-97/44618
- US-A1- 5 833 447
- US-A1- 6 142 765

## Description

La présente invention concerne un procédé de chauffage d'une charge à l'aide d'une flamme à orientation variable vis-à-vis de la charge, cette flamme orientable pouvant notamment être engendrée par une lance et/ou un brûleur et plus particulièrement notamment une lance et/ou un brûleur comportant au moins un canal d'injection d'au moins un jet principal, tel qu'un jet contenant du comburant, du combustible ou un prémélange comburant et combustible.

### Contexte de l'invention

En pratique on détermine à la conception du brûleur les conditions d'interaction des différents jets ou écoulements de comburant et de combustible mis en oeuvre par le brûleur. Une fois le brûleur réalisé, seules les conditions de fonctionnement peuvent être modifiées.

Les conditions d'exploitation des procédés industriels de combustion peuvent évoluer dans le temps. C'est par nature le cas des procédés intermittents mais c'est aussi le cas des procédés continus pour lesquels les caractéristiques des charges à chauffer peuvent varier suivant les besoins de production. C'est plus généralement le cas de toute unité de production soumise au vieillissement ou sensible aux conditions variables de leur environnement.

Pour adapter les performances des brûleurs à des conditions variables de fonctionnement, l'opérateur dispose le plus souvent que de deux paramètres : la puissance de fonctionnement du brûleur et le niveau d'excès d'oxydant (surstoechiométrie d'oxygène).

Certaines technologies de combustion permettent des modes discrets de fonctionnement. C'est par exemple le cas des brûleurs dits « à double impulsion » qui utilisent deux systèmes d'injection différents suivant que l'on veut opérer le brûleur à basse ou à haute impulsion. Ces deux modes de fonctionnement permettent d'augmenter le domaine de fonctionnement ou d'utilisation du brûleur.

Cependant, les modifications du point et/ou du mode de fonctionnement sont le plus souvent insuffisantes pour optimiser dans toutes les conditions les performances des brûleurs ou des procédés utilisant ces brûleurs. Par exemple, l'introduction cyclique dans un four de fusion de matière solide à température ambiante va conduire l'opérateur (ou le système de régulation) à augmenter la puissance de chauffe de manière à obtenir la fusion la plus rapide possible (en vue d'augmenter la productivité), mais sans dégrader pour autant la charge en fusion (qualité du produit) ni surchauffer le four (durée de vie des équipements). Ce compromis entre productivité et qualité et/ou durée de vie dépend notamment de la capacité du système à transférer l'énergie à la charge, en évitant des surchauffes locales de celle-ci ou des réfractaires du four. Ce compromis se traduit par un temps de fusion en deçà duquel tout gain de productivité sera contre-balancé par une dégradation de la qualité du produit ou par la réduction de la durée de vie du four.

Il est connu de WO-A-9744618 un brûleur comportant un jet central de combustible entouré d'abord d'une pluralité de jets de comburant primaires, puis d'une pluralité de jets de comburant secondaires. Il est ainsi possible en fonctionnement de modifier la position de la flamme.

L'utilisation dans un four de fusion de flammes à directions variables est également connue de EP-A-1213364.

### Objet de l'invention

L'invention se propose de contrôler le chauffage d'une charge sans provoquer de surchauffe localisée.

### Description de l'invention

Selon l'invention, le chauffage de la charge est tel que, dans une première phase, on dirige une flamme engendrée par une lance et/ou un brûleur en direction de la charge et, dans une deuxième phase, on dirige la flamme sensiblement parallèlement à la charge.

En particulier, pendant la première phase, l'angle d'injection ou l'incidence ϕ de la flamme peut être compris entre environ 90° et 5°, typiquement entre environ 90° et 10°. Pendant la deuxième phase l'angle d'injection ou incidence ϕ de la flamme est typiquement compris entre environ 5° et 0°.

On entend par angle d'injection ou incidence, l'angle ϕ de la flamme par rapport à l'horizontale. Lorsque l'incidence est nulle, la flamme est horizontale et parallèle au plan défini par la surface libre ou exposée de la charge (abstraction étant faite, dans le cas d'une charge solide, des irrégularités de la surface libre). Lorsque l'incidence est non nulle, la flamme est inclinée sous l'horizontale et dirigée vers la sole du bassin de fusion du four. A un angle d'injection ϕ de 90°, la flamme présente une direction vers la charge et perpendiculaire au plan défini par la surface libre de la charge. A un angle d'injection ϕ de 0°, la direction de la flamme est parallèle au plan défini par la surface libre de la charge.

De préférence, l'angle d'injection ϕ de la flamme pendant la première phase est compris entre 5° et 75°, plus préférentiellement de 25° à 45°.

Le brûleur/la lance comporte avantageusement un ouvreau (par exemple en céramique).

La flamme, dont la direction doit ainsi être variée, est de préférence réalisée au moyen d'une lance et/ou d'un brûleur de position fixe. Ceci nécessite de faire bouger la flamme par des moyens autres que mécaniques. En effet, des moyens mécaniques sont des sources potentielles de dysfonctionnement, en particulier dans des environnements hostiles, tels que les foyers à température élevée.

En particulier dans le cas d'une lance et/ou d'un brûleur de position fixe, la flamme peut être créée par au moins un jet de direction variable, résultant de l'interaction entre au moins un jet de fluide, dit jet principal ou primaire, et au moins un autre jet de fluide, dit jet secondaire ou actionneur.

Le jet principal est avantageusement un jet contenant du comburant, du combustible ou un prémélange comburant et combustible.

La lance/le brûleur peut, de manière utile, comporter au moins un canal d'injection de comburant et au moins un canal d'injection de combustible, disposés concentriquement l'un par rapport à l'autre. La lance/le brûleur peut également comporter au moins un canal d'injection de comburant et au moins un canal d'injection de combustible séparés, de préférence parallèlement l'un à l'autre.

Selon une variante, la flamme est également d'ouverture variable. Le terme « ouverture » d'un jet ou d'une flamme désigne en général, pour un jet débouchant d'une canalisation, l'angle entre l'axe longitudinal de la canalisation et la génératrice à la surface du jet/de la flamme.

Plus particulièrement, la flamme peut être créée par au moins un jet résultant de direction (et éventuellement aussi d'ouverture) variable, ledit jet résultant de l'interaction entre au moins un jet de fluide principal et au moins un jet de fluide secondaire. De préférence, on fait varier le rapport des débits d'au moins un jet principal et d'au moins un jet secondaire qui interagissent l'un avec l'autre, tandis que, plus préférentiellement, le changement de direction de la flamme résulte de la seule interaction d'au moins un jet principal et d'au moins un jet secondaire.

L'invention permet une modification de la résistance thermique entre la flamme et la charge en fonctionnement et de façon continue, de manière à augmenter le transfert de chaleur à la charge, sans avoir à augmenter l'ajout d'énergie dans le four, sans dégrader la qualité de la charge fondue, et en augmentant la productivité sans réduire la durée de vie du four.

Les performances du procédé suivant l'invention peuvent être régulées en boucle fermée ou en boucle ouverte.

Ainsi le procédé selon l'invention peut, par exemple, être un procédé comprenant les étapes :
- d'injecter au moins un jet de fluide principal,
- d'injecter au moins un jet de fluide secondaire,
- de faire interagir au moins un jet de fluide principal avec au moins un jet de fluide secondaire de manière à engendrer au moins un jet résultant de cette interaction, ladite interaction permettant de faire varier la direction et/ou l'ouverture dudit jet résultant et ainsi de la flamme.

De préférence, le nombre de jets secondaires interagissant avec un jet principal pour obtenir l'effet désiré sur le jet résultant sera minimisé de manière à réduire le coût de fabrication de la lance/du brûleur également le coût du système d'alimentation et de régulation des débits des fluides si l'on veut piloter les jets actionneurs de façon indépendante. Un effet mono-directionnel peut être obtenu de préférence avec un seul actionneur. (On définit la direction d'un jet/d'une flamme comme étant un vecteur unitaire normal à la section de passage du fluide orienté dans le sens de l'écoulement, c'est-à-dire de l'amont vers l'aval).

La nature du fluide dans les jets secondaires ou jets actionneurs sera choisie en fonction de l'application visée. En pratique on utilisera souvent un même fluide pour le jet principal et pour le(s) jet(s) actionneur(s). Toutefois, on peut, par exemple, utiliser, pour contrôler la déviation d'un jet d'air, un mélange d'air et d'hélium (de densité inférieure) ou pour augmenter l'entraînement des produits de combustion dans une flamme dont le combustible est du propane, contrôler le jet principal de combustible et/ou de comburant avec un jet secondaire de vapeur d'eau.

En ce qui concerne les propriétés physicochimiques du fluide utilisé pour réaliser les jets secondaires ou actionneurs, elles peuvent être choisies pour contrôler certaines propriétés de l'écoulement résultant. Par exemple, on pourra modifier la réactivité d'un mélange de jets principaux combustible (par exemple, gaz naturel), comburant (par exemple l'air) par utilisation d'oxygène (ou autre comburant), et/ou d'hydrogène (ou autre combustible).

L'invention couvre ainsi un procédé pour chauffer une charge à l'aide d'un outil engendrant une flamme tel qu'un brûleur ou une lance décrit dans la présente demande dans lequel on modifie si nécessaire le rapport des impulsions d'une part du jet de comburant et/ou de combustible et/ou de prémélange et d'autre part du jet de fluide secondaire, de manière à faire varier la direction (et/ou l'ouverture) de la flamme par rapport à la charge.

Dans certains cas du procédé selon l'invention, le débit d'injection de combustible peut être nul. L'outil qui engendre une flamme est alors une lance (pour injecter un comburant tel que l'oxygène, par exemple) dont le jet à une direction (et éventuellement une ouverture) variable. Bien entendu, une lance peut également être utilisée pour injecter du combustible, liquide et/ou gazeux et/ou solide, par exemple une lance à charbon pulvérisé (gaz tel que l'air qui propulse de la poudre solide tel que du charbon).

Si l'on munit l'extrémité de la lance, juste avant l'interaction des jets principal et secondaire(s), d'une buse comportant un convergent/divergent (encore appelée tuyère de Laval dans la littérature), on pourra à la sortie du divergent obtenir (de manière connue en soi dans la littérature) un jet de fluide principal supersonique, par exemple un jet d'oxygène supersonique qui pourra alors être de direction variable (éventuellement d'ouverture variable mais en perdant généralement sa vitesse supersonique, ce qui permet d'alterner les vitesses subsoniques et supersoniques dans certains procédés).

On peut éventuellement n'agir sur le jet principal à l'aide du jet secondaire de préférence que lorsque la vitesse du jet de fluide à la sortie de la tuyère de Laval est subsonique uniquement (en diminuant la pression en amont de la tuyère de Laval). Ceci peut permettre dans une phase d'injection subsonique de « balayer » l'ensemble de la charge en agissant sur le jet principal de la manière décrite dans la présente demande, puis dans une phase supersonique d'agir de manière plus limitée ou même nulle (faible quantité de mouvement du jet secondaire au même quantité de mouvement nulle) sur le jet principal supersonique (application en métallurgie sur un convertisseur, four électrique, etc.).

Selon une variante la flamme est déviée de manière à balayer au moins une partie de la surface de la charge. Il est, par exemple, possible ainsi de dévier la flamme en utilisant au moins deux jets auxiliaires, de manière à obtenir une variation de la direction de la flamme dans au moins deux plans sécants (par exemple, déviation suivant la largeur du four et déviation suivant la longueur du four). Ceci permet notamment de couvrir la totalité de la surface de la charge sans surchauffe localisée.

### Exemples

L'invention sera mieux comprise à l'aide des exemples de réalisation suivants, donnés à titre non limitatif, conjointement avec les figures qui représentent :
- Figure 1 : un schéma de principe de l'interaction des jets dans une lance ou un brûleur pouvant être utilisé dans le procédé selon l'invention.
- Figure 2 : schéma d'une régulation des performances du procédé.
- Figure 3A et B : schéma de jets actionneurs pour contrôler la direction du jet résultant/de la flamme
- Figures 4A et B : schéma de jets actionneurs pour le contrôle de l'ouverture du jet résultant/de la flamme.
- Figure 5 : densité du flux de chaleur d'une flamme en fonction de la distance au point d'injection, sous différentes incidences.
- Figure 6 : transfert de chaleur à la charge en foinciton du rapport de débit des jets actionneurs et du jet principal.
- Figure 7A et B : schéma du procédé pour le chauffage d'une charge
- Figure 8 : schéma illustrant un déplacement latéral de la flamme.

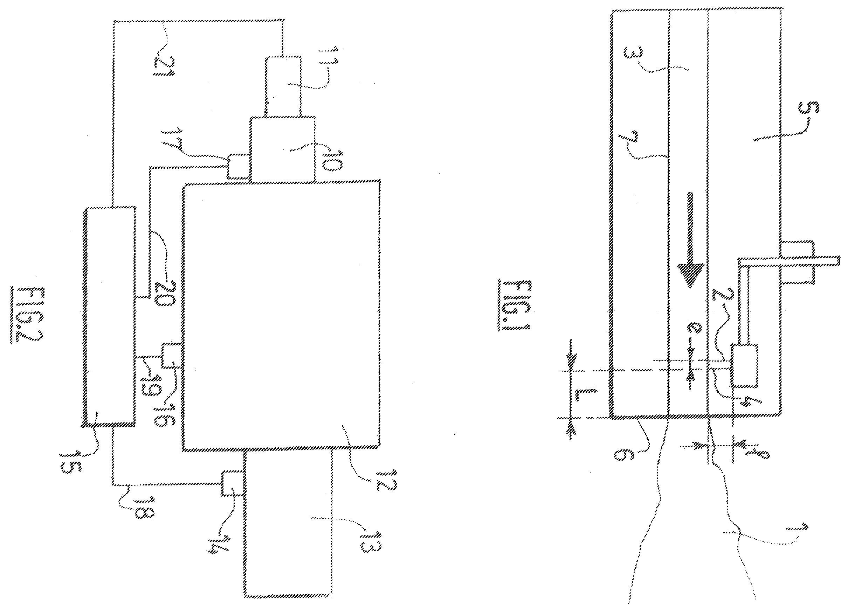

Sur la Figure 1 est représenté un schéma de principe d'un brûleur ou d'une lance pouvant être utilisé dans le procédé pour faire varier la direction (et éventuellement l'ouverture) de la flamme.

Le jet principal 3 issu de l'injecteur principal 7 vient interagir avec le jet actionneur 2 issu de l'injecteur secondaire 4 créant ainsi un jet résultant 1 de direction et/ou d'ouverture différente du jet 3 en l'absence de jet actionneur 2.

Il est à noter sur la Figure 1 que le jet actionneur 2 véhiculé par l'injecteur secondaire 4 qui a la forme d'une canalisation qui traverse la matière 5, par exemple un bloc entourant le canal 7, ce jet actionneur 2 débouchant par l'intermédiaire de l'injecteur secondaire 4, de préférence sensiblement perpendiculairement au jet 3. Le jet principal 3 débouche ici à l'intérieur de la matière 5, c'est à dire avant l'éjection du jet de l'injecteur principal 7. L'interaction entre les jets se produit de préférence (comme illustrée) à l'intérieur des moyens délivrant ce jet principal (tube, ouvreau, etc.) avant que ledit jet principal ne débouche desdits moyens, ou éventuellement là où le jet principal débouche de ces moyens ou à proximité de ce lieu.

La Figure 2 représente un schéma de principe d'un procédé de régulation des performances d'un jet d'une lance ou d'un brûleur utilisant un système de jets selon l'invention.

Les capteurs 14, 16 et 17 mesurent des grandeurs caractérisant les produits de combustion et les conditions du fonctionnement du procédé et/ou du foyer et du brûleur. Ces mesures sont transmises à l'aide des lignes 18, 19 et 20 au contrôleur 15. Ce dernier en fonction de consignes données pour ces grandeurs caractéristiques détermine les paramètres de fonctionnement des actionneurs de manière à maintenir les grandeurs caractéristiques à leurs valeurs de consigne et transmet à l'aide de la ligne 21 ces paramètres aux organes de commande des actionneurs 11.

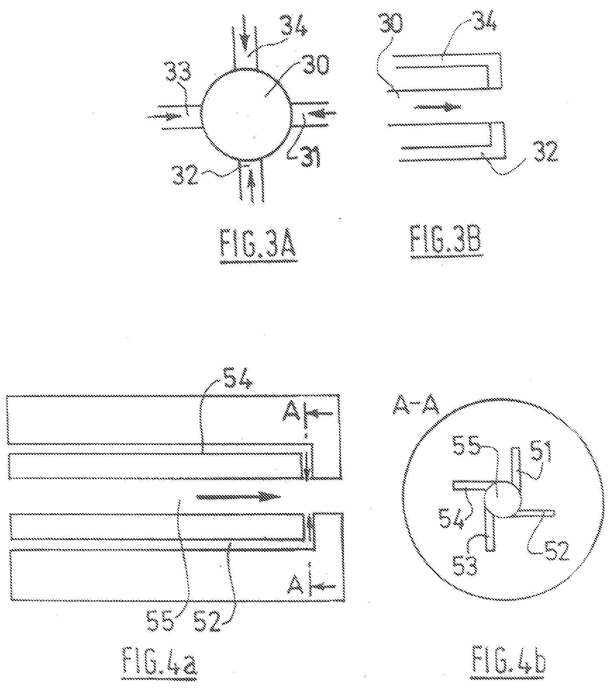

Les Figures 3A et B représentent un schéma de principe d'actionneur pour le contrôle de la direction d'un jet/d'une flamme.

La figure 3A est une vue de face d'un jet 30 comportant quatre jets actionneurs 31, 32, 33 et 34 disposés respectivement par exemple à 90° les uns des autres et venant en incidence perpendiculaire à la direction du jet principal 30. Sur la

Figure 3B est représentée une vue de côté de l'ensemble de la figure 3A. Les jets actionneurs 31 et 33 n'ont pas été représentés.

Si en l'absence de jet actionneur, le jet principal 30 s'écoule perpendiculairement au plan de la figure 3A, l'injection d'un jet dans l'injecteur 33, permet une déviation du jet résultant vers la droite sur la figure 3A (en direction de 31), c'est à dire dans le même sens que le sens d'écoulement du jet 33 (et la même direction).Si simultanément, le jet 34 est actionné, selon les quantités de mouvement relatives des jets 33 et 34, on pourra obtenir un jet résultant dévié dans une direction (projetée dans le plan de la figure 3A) qui peut varier continûment entre les directions des jets 33 et 34 (vers la droite et vers le bas sur la figure 3A).

Les Figures 4a et b représente un schéma de principe d'actionneur pour le contrôle de l'ouverture d'un jet/d'une flamme.

Sur la figure 4a qui est une vue en coupe longitudinale d'un dispositif d'injection, le jet principal 55 (qui s'écoule de la gauche vers la droite sur la figure) rencontre les jets actionneurs (représentés sur la figure 4b qui est une vue de face selon l'axe AA de la figure 4a) 51, 52, 53 et 54, qui viennent impacter le jet principal 55 de manière tangentielle permettant selon les impulsions de ces différents jets « d'ouvrir » plus ou moins le jet principal 55. Cet effet d'ouverture est essentiellement du au fait que les jets actionneurs et le jet principal ont des axes qui ne se coupent pas, bien que les jets aient une interaction physique entre eux. Ceci entraîne une rotation du jet principal sur lui-même et ainsi un changement de l'ouverture du jet/de la flamme.

Pour obtenir à la fois un effet de direction et d'ouverture, on combinera l'enseignement des paragraphes précédents.

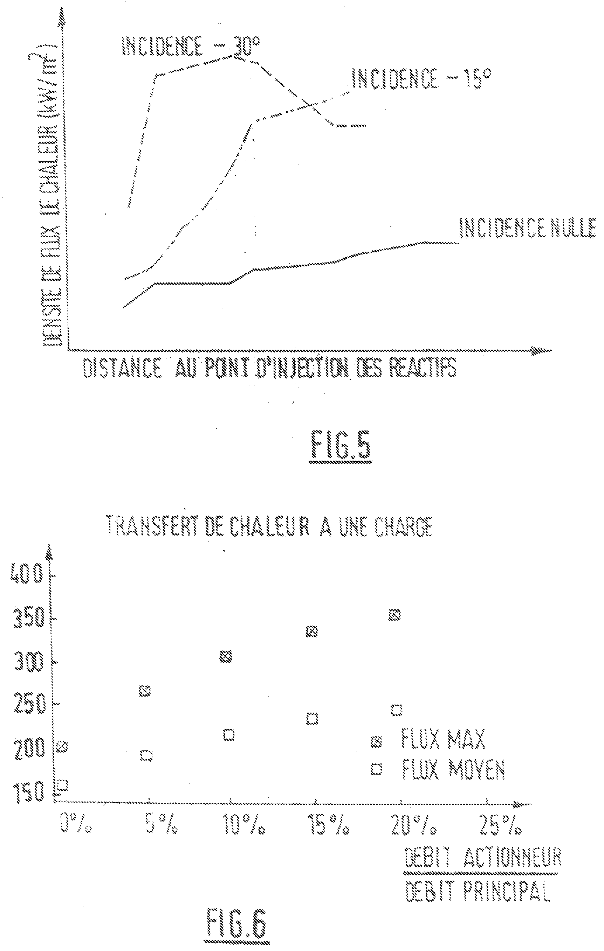

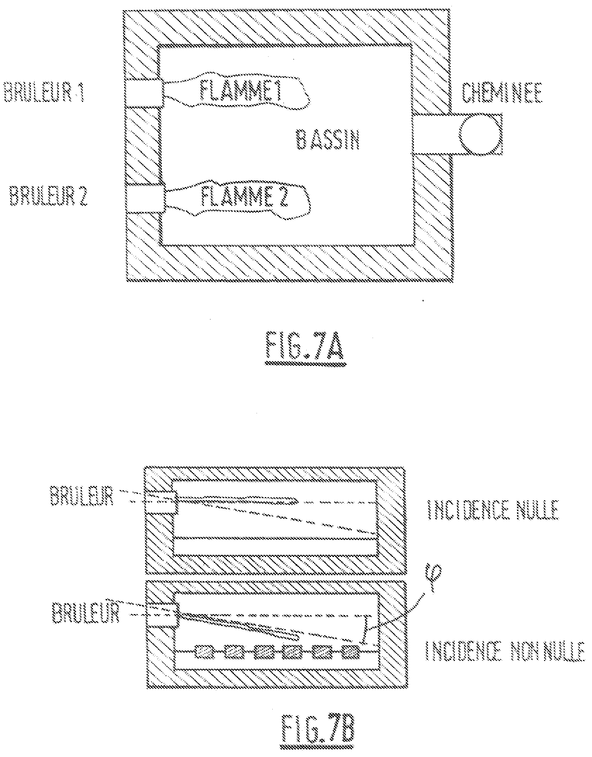

La figure 5 montre trois profils de flux de chaleur transférée par une flamme à une charge selon l'angle d'incidence de la flamme sur la charge en fonction de la distance au point d'injection des réactifs sur l'axe du brûleur. On observe une très forte augmentation du flux de chaleur transféré à la charge avec l'augmentation de l'incidence de la flamme. Pour une incidence nulle (ϕ = 0 - voir figure 7B), le flux de chaleur est sensiblement constant sur toute la longueur de la flamme ; pour une incidence de 15°, le flux transféré augmente très vite, puis un peu moins vite à partir du point A, tandis que pour une incidence de flamme de 30°, le flux transféré augmente extrêmement rapidement jusqu'au point B, puis moins rapidement sensiblement jusqu'au point A, à partir duquel le transfert diminue.

La figure 6 représente le transfert de chaleur à une charge par une flamme de direction variable réalisé par l'interaction d'un jet principal avec des jets actionneurs. La figure 6 représente plus particulièrement le flux de chaleur délivré en fonction du rapport du débit des jets actionneurs sur le débit du jet principal (représenté ici aussi en pourcentage du débit du jet principal), aussi bien pour le jet de combustible que pour le jet de comburant (brûleur à injection séparée). Chaque jet initialement injecté parallèlement au-dessus de la charge est progressivement dévié en direction de la charge, ce qui augmente le transfert de chaleur à la charge.

L'invention va être ci-après illustrée dans le cas d'un brûleur utilisé pour chauffer une charge quelconque qui peut être une charge métallique ou tout autre charge qui doit être fondue et/ou amenée à une température élevée, puis maintenue à celle-ci, par exemple une charge de métal ferreux ou non ferreux, de verre, de ciment ou au contraire une charge qui doit être séchée à partir d'un bain liquide.

Il est possible d'appliquer l'invention sur un outil de traitement d'acier dans un four électrique à arc, par exemple de la façon suivante : l'outil comporte une flamme (habituellement subsonique) qui permet de chauffer le métal, le faire fondre, notamment au début d'une fusion. Cette flamme comme expliqué dans la présente demande, peut être de direction variable en équipant chaque jet principal (comburant, combustible, prémélange) ou au moins un jet principal d'un jet actionneur qui vient faire varier sa direction (et éventuellement son ouverture), de manière à pouvoir déplacer cette flamme sur la charge sans nécessiter des moyens mécaniques lourds qui changent la direction du corps du brûleur.

Au centre de l'outil est généralement prévu un canal d'injection à vitesse supersonique (équipé d'une tuyère de Laval) de gaz tel que l'oxygène, l'azote, etc. Ce canal peut lui-même être équipé d'un canal d'injection de jet auxiliaire pour faire varier la direction du jet (subsonique ou supersonique). On peut également prévoir des jets actionneurs pour augmenter l'ouverture du jet principal, par exemple lorsque sa vitesse est subsonique. En général, on s'abstiendra d'actionner de tels jets actionneurs sur un jet principal à vitesse supersonique car on essaie généralement de garder l'angle d'ouverture du jet aussi faible que possible dans ce cas, afin d'augmenter la pénétration de ce jet supersonique.

Dans certaines phases de fonctionnement, on peut utiliser un jet central (par exemple oxygène, azote, etc.) à vitesse supersonique entouré d'une flamme afin de lui conserver le plus longtemps possible une vitesse proche de sa vitesse initiale à la sortie de la tuyère (convergent/divergent).

La flamme pourra éventuellement selon les étapes du procédé dans le four électrique avoir une ouverture plus ou moins grande (c'est à dire couvrant sur une longueur plus ou moins grande le jet supersonique).

Les exemples ci-après sont relatifs au contrôle du transfert de chaleur d'un brûleur utilisant l'invention vers une charge dans un procédé de fusion d'une charge, par exemple une charge de métal (qui peut comporter des parties solides et/ou liquides. De tels exemples peuvent notamment être réalisés en utilisant un procédé de régulation tel que décrit ci-dessus.

Un four de fusion d'aluminium est généralement équipé d'un ou plusieurs brûleurs sur une ou plusieurs des parois latérales entourant le bassin de fusion du four, disposés au-dessus de la ligne de flottaison du métal lorsque ce dernier est complètement fondu (liquide). L'axe de la flamme, lorsque celle-ci est horizontale, est situé à une hauteur comprise 10 et 100 cm par rapport à cette ligne de flottaison, préférablement entre 40 et 80 cm.

### • Exemple 1 : cas de matière solide dans le four :

Dans cet exemple, on utilise des injecteurs pour que l'incidence de flamme soit variable. Chaque jet de fluide est injecté dans la chambre du four par le biais d'un injecteur.

Dans la première partie du cycle de fusion de l'aluminium, lorsque le métal est majoritairement présent à l'état solide, on règle la flamme pour que celle-ci ait une incidence non nulle (axe de la flamme entre 5° et 75°, préférablement entre 25° et 45°). Ce réglage permet d'améliorer considérablement le transfert thermique du brûleur et donc de réduire la durée de la fusion (comme expliqué à l'aide de la figure 6).

Lorsque la plupart des blocs de métal solide sont fondus, on règle la flamme de manière à avoir un angle d'incidence nulle. La flamme est donc parallèle à la ligne de flottaison du métal liquide. Ce réglage permet de continuer à transférer de l'énergie à la charge et d'achever la fusion du métal ou de l'affiner en limitant l'échauffement du métal déjà fondu et par conséquent, son oxydation par la flamme ou les produits de combustion.

Entre les positions extrêmes de la flamme décrites ci-avant (incidence franche et incidence nulle), on peut également pendant la première partie du cycle adopter un réglage intermédiaire, statique, où l'incidence de la flamme est comprise entre 5° et 30°, préférablement entre 10° et 25°, pour obtenir un compromis entre couverture de la charge du four par la flamme (surface projetée de la flamme sur le bain) et intensité du transfert thermique. Les figures 7A et B illustrent les positions de la flamme par rapport à la charge dans les deux phases du procédé de chauffage.

La figure 7A est une vue de dessus d'un four de fusion d'aluminium équipé de deux brûleurs selon l'invention produisant deux flammes positionnées au dessus du bain de métal.
La cheminée du four permet l'évacuation des fumées produites par les flammes.

La figure 7B représente une vue de côté du même four au niveau d'une des flammes.

Sur la figure 7B, partie inférieure, la flamme est inclinée d'un angle ϕ par rapport à l'horizontale, de préférence lorsque du métal solide est encore présent sur le bain métallique, tandis que sur la partie supérieure de cette figure, la flamme est positionnée en incidence nulle (ϕ = 0).

Entre les positions extrêmes de la flamme (incidence franche et incidence nulle), on peut également pendant la première partie du cycle faire varier de façon périodique l'angle d'incidence de la flamme.
Par exemple, dans la première phase, l'opérateur du four peut faire varier, éventuellement manuellement, l'incidence entre 5° à 45° ou entre 10° et 45°, puis revenir à 0° dans la deuxième phase. De préférence, on pilotera le brûleur avec un boîtier de commande permettant de moduler de façon périodique le rapport de contrôle du brûleur, c'est-à-dire le rapport des impulsions des jets principal et actionneur(s) et par conséquent l'incidence de la flamme sur le bain. Le signal de commande du boîtier de commande pourra être sinusoïdal, triangulaire, carré, etc. avec une fréquence variable de 0.05 Hz à 100 Hz, préférablement triangulaire à une fréquence 0.1 à 10 Hz. La variation périodique de la position de la flamme permet d'homogénéiser le transfert de chaleur à l'intérieur du four et ainsi de faire fondre plus rapidement les éléments solides.

### • Exemple 2 : homogénéiser le transfert d'énergie à la charge :

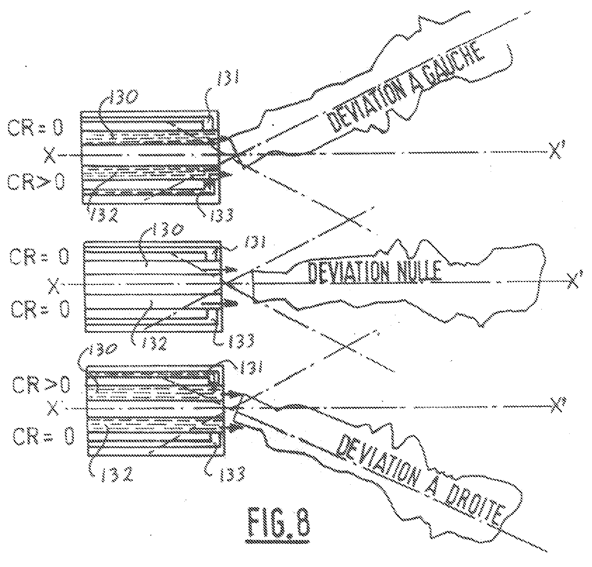

Dans cet exemple, on utilisera des injecteurs selon l'invention pour que l'orientation horizontale de la flamme puisse être modifiée à la demande en fonction du rapport de contrôle de chaque injecteur comme illustré sur la figure 8.

Chaque jet de fluide est injecté dans la chambre du four par le biais d'un tel injecteur, mais pour des jets issus de points d'injection situés dans un même plan horizontal ou des plans horizontaux peu espacés l'un de l'autre (de un à deux diamètres de jet par exemple), on peut se contenter de n'utiliser ces injecteurs que pour les jets périphériques lorsque ceux-ci peuvent interagir avec les autres jets à dévier.

La variation de l'orientation horizontale peut se faire dans les deux sens gauche et droite soit en équipant chaque jet principal de deux jets actionneurs latéraux, soit en équipant chaque jet principal périphérique d'un seul jet actionneur, capable d'actionner le jet principal dans le sens horizontal mais de sens opposés l'un à l'autre. On peut également désaxer l'injecteur principal de sorte qu'à un rapport de contrôle nul, la flamme soit naturellement déviée (à droite ou à gauche) par rapport à l'axe X - X' du brûleur sur la figure 8, et faire alors varier l'orientation de la flamme en augmentant progressivement le rapport de contrôle du système de commande (c'est à dire obtenir un jet selon l'axe X - X' avec un rapport de contrôle non nul).

L'utilisation de un ou plusieurs brûleurs à orientation de flamme variable permet d'augmenter la couverture de la charge par déplacement horizontale de la flamme.

(L'expression rapport de contrôle utilisée ci-avant est définie comme étant le rapport des débits du jet actionneur et du jet principal, sachant que l'impulsion d'un jet de fluide peut se contrôler simplement par la variation de l'ouverture d'une vanne, l'augmentation de l'ouverture d'une vanne étant proportionnelle à l'augmentation du débit du jet, toutes choses égales par ailleurs).

Lorsque les rapports de contrôle du/des brûleur(s) sont nuls, l'orientation de la flamme est située dans l'axe naturel du brûleur et la flamme couvre une portion de la charge. Lorsque l'un des rapports de contrôle est non nul, la position de la flamme est déviée et la flamme couvre une autre portion de la charge.

La figure 8 illustre un exemple de déplacement horizontal d'une flamme au-dessus d'une charge ; chaque jet principal 130, 132 (comburant ou combustible) est muni d'un jet actionneur 131, 133 ; dans la partie supérieure de la figure 8, le rapport de contrôle CR du jet 130 est nul, c'est à dire qu'aucun fluide n'est injecté dans le canal 131 ; le rapport de contrôle CR du jet 132 est par contre positif, ce qui veut dire que du fait que 133 agit de bas en haut sur la figure, le jet actionneur 133 dévie le jet principal 132 vers le haut sur la figure, c'est à dire vers la gauche par rapport à l'axe X - X' du brûleur.

Sur la partie centrale de la figure 8, les rapports de contrôle des deux jets principaux 130 et 132 étant nuls, (CR = 0), il n'y a pas de jets actionneurs en action et la flamme se propage selon l'axe X - X'.

Sur la partie inférieure de la figure 8, le rapport de contrôle CR du jet 130 et du jet est positif ce qui entraîne une dérivation de la flamme vers le bas sur la figure (vers la droite en vue de dessus), le jet principal 132 et le jet actionneur 133 ayant un rapport de contrôle nul (pas de jet 133).

Comme explicité à l'exemple 1, l'opérateur du four peut faire varier manuellement, périodiquement ou non les rapports de contrôle afin de modifier la position de la flamme. Les rapports de contrôles peuvent également être ajustés à l'aide d'un boîtier de commande permettant de moduler de façon périodique le rapport de contrôle du brûleur.

Ainsi, chaque brûleur peut couvrir une portion de charge plus grande favorisant l'homogénéité du transfert thermique et permettant de limiter la formation éventuelle de points chauds si des matériaux réfractaires se trouvent dans le bain (par exemple résidus à base d'alumine, recyclés ou en cours de formation par oxydation du métal en cours de fusion), et de favoriser globalement le transfert thermique permettant d'accélérer le processus de fusion à puissance constante, ou de réduire la consommation énergétique à temps de fusion constant.

### • Exemple 3: flamme à incidence variable sur la charge et qui balaie latéralement la charge.

### • Exemple 4 : régulation en boucle fermée :

Cet exemple de réalisation de l'invention permettant de contrôler le déplacement à la fois horizontal et vertical de la flamme en fonction par exemple de différents paramètres de fonctionnement du four, donnés par différents types de capteurs installés sur le four, et notamment des capteurs de flux de chaleur, de température, ou éventuellement de composition chimique (par exemple diode laser de type TDL).
- Une boucle de régulation dont le capteur est un dispositif de mesure permettant d'obtenir une image du transfert thermique à la charge ou de l'oxydation du bain d'aluminium, cette information permettant de diminuer ou augmenter le transfert à la charge en agissant sur le débit du jet actionneur, comme explicité ci-avant.
- Une boucle de régulation de la position de flamme basée sur la mesure de la température du bain, lorsqu'une portion au-moins du bain est présente à l'état liquide. Tant que la température de bain est inférieure à une valeur Tc, comprise entre 650 et 750°C par exemple pour l'aluminium, la flamme doit rester en incidence non nulle sur le bain pour maximiser le transfert de chaleur. Lorsqu'on se rapproche de la valeur Tc, on relève progressivement la flamme pour l'écarter du bain, d'autant plus que la valeur cible est atteinte, afin de limiter les risques d'oxydation de la charge. On régule ensuite l'incidence de la flamme pour maintenir la température à sa valeur cible.
- Une boucle de régulation de la position de la flamme basée sur la mesure du flux thermique :
   Ce flux thermique peut éventuellement être évalué par le biais d'une différence de températures lue entre deux thermocouples plongés dans le bain à deux profondeurs différentes mais sur une même génératrice perpendiculaire à la sole du four.,
   Le flux thermique peut également être déduit des transferts thermiques calculés au travers de la sole du four, toujours par mesure de la différence de température en son sein. Etant donné la plus grande résistivité de la sole, constituée de matériaux réfractaires, il est plus facile d'obtenir un gradient de température significatif.
   Le flux thermique peut aussi être suivi grâce à un flux-mètre disposé par exemple en voûte de la chambre de fusion. En effet, toutes choses égales par ailleurs, toute diminution du flux perçu par la voûte et observé par le flux-mètre, correspondra au-moins partiellement à une augmentation du flux de chaleur transmis à la charge.(On s'intéresse moins à la valeur absolue du flux thermique transmis à la charge (ou des pertes aux parois) qu'à l'évolution temporelle du signal lui correspondant).
   La fusion de la charge débutera avec une flamme en incidence franche sur la charge, cette incidence étant conservée tant que le flux transmis à la charge restera élevé. Dès lors que ce flux diminue, révélateur d'une augmentation de la température de la charge et de la diminution de sa capacité d'absorption thermique, on relève progressivement la flamme pour l'écarter du bain, afin de limiter les risques d'oxydation ou de surchauffe de la charge.
- Une boucle de régulation de la position de la flamme basée sur la mesure de la composition des fumées à la sortie du four ou à l'intérieur du four, par exemple avant le collecteur des fumées du four, au-dessus du bain, entre la flamme en incidence et le bain d'aluminium, etc... pour la détection d'une ou plusieurs espèces révélatrices de l'oxydation du bain d'aluminium telles que le CO :
   a. La composition des fumées peut être mesurée de manière connue en soi par extraction puis analyse (analyseurs classiques, TDL ou autres) ou in-situ par absorption (diode laser ou autre) ou par sonde électrochimique.
   b. La fusion débute avec une flamme en incidence franche sur la charge, et cette incidence est conservée tant que le ou les traceurs de l'oxydation de la charge sont stables et en faible quantité. Dès lors que la concentration du ou des traceurs de l'oxydation augmente, on relève progressivement la flamme pour l'écarter du bain, afin de limiter la concentration du ou des traceurs, et donc l'oxydation de la charge, en agissant sur le jet principal par l'intermédiaire du jet actionneur comme expliqué ci-avant.
   c. En outre, la position de la flamme peut-être réglée pour atteindre une valeur de consigne puis maintenir une consigne précise de concentration en traceur d'oxydation. On peut en effet se fixer un seuil de concentration à ne pas dépasser et ajuster en permanence l'incidence de la flamme pour y arriver.

Il faut noter dans tous les cas que lorsque la charge est composée au-moins en partie de solide froid, on peut orienter franchement la flamme en incidence sur la charge puisque tant que les températures restent modestes, par exemple inférieures à 600°C pour l'aluminium le taux d'oxydation reste faible. Lorsque la charge est devenue essentiellement liquide, la régulation utilisée devient importante pour éviter la montée en température du métal et l'oxydation de celui-ci. Pour une application de l'invention au chauffage d'un matériau autre que l'aluminium, par exemple pour chauffer un bain de verre, etc., les mêmes principes de régulation s'appliquent, pour des températures et des critères qui sont différents d'un matériau à l'autre, mais qui sont en eux-mêmes, bien connus de l'homme de métier.

## Revendications

1. - Procédé de chauffage d'une charge à l'aide d'une flamme engendrée par une lance et/ou un brûleur, **caractérisé en ce que** dans une première phase, on dirige la flamme en direction de la charge et **en ce que** dans une deuxième phase, on dirige la flamme sensiblement parallèlement à la charge.

2. - Procédé selon la revendication 1, **caractérisé en ce que** la lance et/ou le brûleur sont une lance et/ou brûleur à position fixes produisant une flamme à direction variable.

3. - Procédé selon la revendication 1 ou 2, **caractérisé en ce que**, pendant la première phase, l'angle d'injection ϕ de la flamme est compris entre environ 90° et 5° et **en ce que** pendant la deuxième phase l'angle d'injection ϕ de la flamme est compris entre 5 ° et 0° environ.

4. - Procédé selon l'une des revendications précédentes, **caractérisé en ce que** l'angle d'injection ϕ de la flamme pendant la première phase est compris entre 5° et 75°, de préférence 25° et 45°.

5. - Procédé selon l'une des revendications précédentes, **caractérisé en ce que** la flamme est d'ouverture variable.

6. - Procédé selon l'une des revendications précédentes,la flamme étant créée par au moins un jet résultant (1) de direction variable, ledit jet (1) étant obtenu par une interaction entre au moins un jet de fluide principal (3, 30, 130, 132) et au moins un jet de fluide secondaire (2, 31, 32, 33, 34, 131, 133).

7. - Procédé selon la revendication 6, **caractérisé en ce que** l'on fait varier le rapport des débits d'au moins un jet principal (3, 30, 130, 132) et d'au moins un jet secondaire (2, 31, 33, 34, 131, 133) qui interagissent l'un avec l'autre.

8. - Procédé selon l'une des revendications 6 et 7, **caractérisé en ce que** le changement de direction de la flamme résulte de la seule interaction d'au moins un jet principal (3, 30, 130, 132) et d'au moins un jet secondaire (2, 31, 33, 34, 131, 133).

9. - Procédé selon l'une des revendications 6 à 8, **caractérisé en ce que** le jet principal (3, 30, 130, 132) est un jet contenant du comburant, du combustible ou un prémélange comburant et combustible.

10. - Procédé selon l'une des revendications précédentes, **caractérisé en ce que** la charge est une charge de métal ferreux ou non ferreux, de verre, de ciment ou une charge qui doit être séchée à partir d'un bain liquide.

## Patentansprüche

1. Verfahren zum Erhitzen einer Last mit Hilfe einer Flamme, die durch eine Lanze und/oder einen Brenner erzeugt wird, **dadurch gekennzeichnet, dass**, in einer ersten Phase, die Flamme in Richtung der Last ausgerichtet wird, und dadurch, dass, in einer zweiten Phase, die Flamme im Wesentlichen parallel zur Last ausgerichtet wird.

2. Verfahren nach Anspruch 1, **dadurch gekennzeichnet, dass** die Lanze und/oder der Brenner eine Lanze und/oder ein Brenner mit festen Positionen sind, die eine Flamme mit variabler Richtung erzeugen.

3. Verfahren nach Anspruch 1 oder 2, **dadurch gekennzeichnet, dass** während der ersten Phase der Injektionswinkel ϕ der Flamme zwischen ungefähr 90° und 5° liegt, und dadurch, dass während der zweiten Phase der Injektionswinkel ϕ der Flamme zwischen ungefähr 5° und 0° liegt.

4. Verfahren nach einem der vorhergehenden Ansprüche, **dadurch gekennzeichnet, dass** der Injektionswinkel ϕ der Flamme während der ersten Phase zwischen 5° und 75°, vorzugsweise 25° und 45° liegt.

5. Verfahren nach einem der vorhergehenden Ansprüche, **dadurch gekennzeichnet, dass** die Flamme eine variable Öffnung aufweist.

6. Verfahren nach einem der vorhergehenden Ansprüche, wobei die Flamme durch mindestens einen resultierenden Strahl (1) mit variabler Richtung erzeugt wird, wobei der Strahl (1) von einer Wechselwirkung zwischen mindestens einem hauptsächlichen Fluidstrahl (3, 30, 130, 132) und mindestens einem sekundären Fluidstrahl (2, 31, 32, 33, 34, 131, 133) erhalten wird.

7. Verfahren nach Anspruch 6, **dadurch gekennzeichnet, dass** die Beziehung der Durchsätze von mindestens einem hauptsächlichen Strahl (3, 30, 130, 132) und mindestens einem sekundären Strahl (2, 31, 33, 34, 131, 133), die miteinander in Wechselwirkung stehen, variiert werden.

8. Verfahren nach einem der Ansprüche 6 und 7, **dadurch gekennzeichnet, dass** sich die Änderung der Richtung der Flamme aus der bloßen Wechselwirkung von mindestens einem hauptsächlichen Strahl (3, 30, 130, 132) und mindestens einem sekundären Strahl (2, 31, 33, 34, 131, 133) ergibt.

9. Verfahren nach einem der Ansprüche 6 bis 8, **dadurch gekennzeichnet, dass** der Hauptstrahl (3, 30, 130, 132) ein Strahl ist, der Oxidationsmittel, Brennstoff oder eine Vormischung aus Oxidationsmittel und Brennstoff enthält.

10. Verfahren nach einem der vorhergehenden Ansprüche, **dadurch gekennzeichnet, dass** die Last eine Last aus Eisenmetall und Nichteisenmetall, Glas, Zement oder eine Last ist, die ausgehend von einem Flüssigkeitsbad getrocknet werden muss.

## Claims

1. Method for heating a charge by means of a flame generated by a lance and/or a burner, **characterised in that** in a first phase the flame is directed in the direction of the charge and **in that** in a second phase the flame is directed substantially parallel to the charge.

2. Method according to claim 1, **characterised in that** the lance and/or the burner are a lance and/or burner with a fixed position producing a flame with a variable direction.

3. Method according to claim 1 or 2, **characterised in that** during the first phase the flame injection angle ϕ is between approximately 90° and 5° and **in that** during the second phase the flame injection angle ϕ is between approximately 5° and 0°.

4. Method according to one of the preceding claims, **characterised in that** the flame injection angle ϕ during the first phase is between 5° and 75°, preferably 25° and 45°.

5. Method according to one of the preceding claims, **characterised in that** the flame has a variable splay angle.

6. Method according to one of the preceding claims, the flame being created by at least one resulting jet (1) with a variable direction, said jet (1) being obtained by an interaction between at least one main jet of fluid (3, 30, 130, 132) and at least one secondary jet of fluid (2, 31, 33, 34, 131, 133).

7. Method according to claim 6, **characterised in that** the ratio of the outputs of at least one main jet (3, 30, 130, 132) and at least one secondary jet (2, 31, 33, 34, 131, 133) that interact with each other is varied.

8. Method according to one of claims 6 and 7, **characterised in that** the change in direction of the flame results solely from the interaction of at least one main jet (3, 30, 130, 132) and at least one secondary jet (2, 31, 33, 34, 131, 133).

9. Method according to one of claims 6 to 8, **characterised in that** the main jet (3, 30, 130, 132) is a jet containing oxidant, fuel or a pre-mixture of oxidant and fuel.

10. Method according to one of the preceding claims, **characterised in that** the charge is a charge of ferrous or non-ferrous metal, glass or cement or a charge that must be dried using a liquid bath.
